Europäisches Patentamt

European Patent Office

Office européen des brevets

(19)

(11) Numéro de publication : **0 331 538 B1**

(12)

# FASCICULE DE BREVET EUROPEEN

(45) Date de publication du fascicule du brevet :
**15.04.92 Bulletin 92/16**

(51) Int. Cl.⁵ : **G01N 11/16**

(21) Numéro de dépôt : **89400250.0**

(22) Date de dépôt : **30.01.89**

(54) **Viscodensimètre à éléments vibrants pour liquides.**

(30) Priorité : **02.02.88 FR 8801194**

(43) Date de publication de la demande :
**06.09.89 Bulletin 89/36**

(45) Mention de la délivrance du brevet :
**15.04.92 Bulletin 92/16**

(84) Etats contractants désignés :
**BE CH DE ES GB IT LI**

(56) Documents cités :
**FR-A- 1 311 330**
**FR-A- 2 101 822**
**FR-A- 2 353 847**
**FR-A- 2 462 701**
**GB-A- 2 136 123**
**US-A- 2 340 507**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Petres, Jacques
18 Bld Maréchal Leclerc
F-38000 Grenoble (FR)**

(74) Mandataire : **Mongrédien, André et al
c/o BREVATOME 25, rue de Ponthieu
F-75008 Paris (FR)**

EP 0 331 538 B1

## Description

L'invention se rapporte à un viscodensimètre à éléments vibrants tels que tiges ou épingles vibrantes pour liquides.

Elle trouve une application dans la mesure simultanée et en continu de la viscosité et de la densité d'un liquide dans des conditions physicochimiques identiques, notamment pour les liquides corrosifs, sous pression, ou à température élevée.

Il existe différents types de viscosimètres à tige vibrante simple ou à épingle vibrante simple. En particulier, on connaît déjà un viscosimètre à vibration décrit dans le brevet français FR-A-2 353 847 du genre de ceux qui comprennent une épingle à deux branches, traversant une paroi et plongeant dans un liquide à étudier par sa partie médiane, des moyens pour appliquer à l'extrémité de la première branche de l'épingle une vibration alternative, des moyens de mesure de la vibration transmise à l'extrémité de la seconde branche de l'épingle, des moyens pour comparer la vibration appliquée et la vibration transmise, et notamment pour mesurer le déphasage entre les deux vibrations qui est fonction de la viscosité du liquide.

Cependant un tel appareil, pour augmenter sa sensibilité, nécessite d'augmenter la longueur des branches de l'épingle et ne permet de mesurer que la viscosité du liquide alors que très souvent il est nécessaire de connaître également la densité de ce même liquide aux mêmes conditions physicochimiques.

La présente invention a pour but de remédier à ces inconvénients. Elle a pour objet un viscodensimètre à vibration pour liquides du type à tiges vibrantes à palette ou à épingles vibrantes à palette. Il ne sera décrit maintenant que le viscodensimètre à deux épingles vibrantes à palette, l'invention pouvant s'appliquer aux viscodensimètres à deux tiges vibrantes à palette. Les épingles sont en forme de U, semblables, dans des plans parallèles et munies chacune d'une palette fixée à leur partie inférieure suivant des directions parallèle pour l'une et perpendiculaire pour l'autre à la direction des vibrations. En effet, les épingles sont chacune excitées en vibration, à l'extrémité d'une branche dite menante, par un générateur de vibration qui les soumet à un mouvement alternatif identique à cet endroit car elles sont réunies par une barrette de jumelage.

Plus précisément, l'invention concerne un viscodensimètre à éléments vibrants pour liquides, comprenant deux éléments vibrants à deux branches munis chacun d'une palette à leur partie inférieure plongeant dans le liquide, une barrette de jumelage reliant entre elles une extrémité supérieure de chaque élément, des moyens de mise en vibration de la barrette de jumelage ou de l'extrémité supérieure de chaque élément vibrant, des capteurs de déplacement situés sur la barrette de jumelage et aux extrémités supérieures des éléments vibrants, une des palettes étant orientée parallèlement à la direction de la vibration, l'autre palette perpendiculairement à ladite direction.

Un moyen préférentiel de mise en vibration consiste à utiliser un excentrique entraîné par un moteur.

La barrette de jumelage peut être avantageusement agencée pour permettre la désolidarisation de l'un ou l'autre des éléments, ce qui permet de n'utiliser que l'un ou l'autre des moyens de mesure.

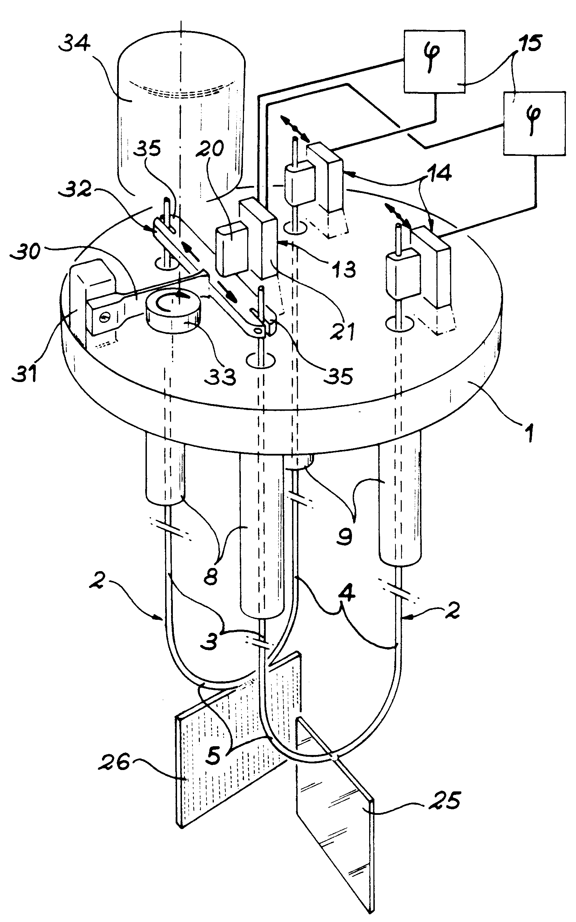

Une réalisation particulière de l'invention va maintenant être décrite plus précisément à l'aide de la figure unique annexée et donnée à titre illustratif et non limitatif.

Le viscodensimètre d'après l'invention comprend une bride-support plane 1 percée de quatre trous au travers desquels passent librement les quatre branches 3 et 4 de deux épingles 2 en U identiques contenues dans des plans parallèles. Pour chaque épingle 2, une branche 3 est appelée "branche menante" et l'autre branche 4 "branche menée" ; une traverse 5 relie les extrémités inférieures des branches menante 3 et menée 4 pour chaque épingle 2. Le liquide dont il faut mesurer les caractéristiques se trouve sous la bride-support 1. Chaque trou est prolongé vers le bas par un tube cylindrique souple, 8 pour les branches menantes 3 et 9 pour les branches menées 4, dont les extrémités supérieures sont fixées sur la bride-support 1 et les extrémités inférieures sont traversées de façon étanche par chacune des branches 3 ou 4 des épingles 2. Cette disposition permet de garantir l'étanchéité du dispositif tout en conférant une souplesse suffisante au montage des épingles 2 ; elle est connue par le brevet FR-A-24 62 701.

Un mouvement de vibration alternative est communiqué aux extrémités supérieures des deux branches menantes 3. Pour cela, ces extrémités supérieures sont reliées entre elles par une barrette de jumelage 32 susceptible d'être mise en vibration par un excentrique 33 à l'aide d'un moteur 34. Le mouvement vibratoire est en direction perpendiculaire au plan de chacune des épingles 2. Plus précisément, l'excentrique 33 agit sur une tige 30 qui relie la barrette 32 à un point fixe 31. Un moyen de rappel non représenté plaque la tige 30 contre l'excentrique 33.

La barrette vibrante 32 est équipée d'un capteur de déplacement 13 qui peut fonctionner par effet Hall. Les extrémités libres ou supérieures des branches menées 4 des épingles 2 sont chacune munies d'un autre capteur de déplacement 14 qui peut être également à effet Hall. Les signaux issus de ces capteurs de déplacement 13 et 14 sont traités par des phasemètres 15.

L'une des épingles 2 a pour fonction la mesure de la densité du fluide à contrôler alors que l'autre épingle doit permettre d'en mesurer la viscosité. Dans ce but, chacune des épingles est munie d'une palette soudée au bas de l'épingle, sur la traverse 5 : l'une d'entre elles 25 est plane et perpendiculaire au plan de l'épingle 2 sur laquelle elle est fixée ; l'autre 26 est également plane et parallèle au plan de l'autre épingle 2 sur laquelle elle est fixée.

En effet, la viscosité et la densité du liquide à contrôler se traduisent par des frottements sur les épingles 2 et leurs palettes 25 et 26, ce qui crée un amortissement des vibrations et donc un déphasage entre les mouvements vibratoires générés par l'excentrique 33 et mesurés par le capteur de déplacement 13 et ceux vus par les capteurs de déplacement 14 aux extrémités libres des épingles 2. Ces déphasages permettent de mesurer après étalonnage les caractéristiques du liquide. La réponse de l'épingle vibrante est de la forme :

$$\varphi = a.\,\mu^b \times \rho^c,$$

formule dans laquelle $\varphi$ représente un angle de déphasage, $\mu$ la viscosité dynamique du liquide et $\rho$ sa densité, a, b et c sont des coefficients qui dépendent de la géométrie des masses vibrantes, de la fréquence d'excitation et qui sont obtenus par étalonnage dans trois liquide différents.

Dans le viscodensimètre objet de l'invention, les deux épingles ont respectivement pour réponse

$$\varphi_v = a_v \times \mu^{b_v} \times \rho^{c_v} \quad et \quad \varphi_d = a_d \times \mu^{b_d} \times \rho^{c_d}.$$

Les angles $\varphi_v$ et $\rho_d$ étant mesurés par les phasemètres 15, on a donc un système de deux équations à deux inconnues qui permet de tirer $\mu$ et $\rho$.

La géométrie de l'ensemble des masses en mouvement est choisie de telle façon que, pour une des épingles 2 sensible plus particulièrement à la densité du liquide, on ait $c_d > b_d$ et pour l'autre épingle, sensible plus spécialement à la viscosité du liquide, on ait $b_v > c_v$.

La première épingle 2 est celle qui possède la palette 26 parallèle à son plan, et la seconde celle qui possède l'autre palette 25 perpendiculaire à son plan. Pour une réalisation particulière, on a constaté qu'une épingle 2 dépourvue de palettes vérifiait b=0,5 et c=1,5 avec la palette 25, ces coefficients devenaient respectivement 0,61 et 0,46 et avec l'autre palette 26, respectivement 0,15 et 3,88.

Ces caractéristiques favorables peuvent être mises à profit dans des applications pour lesquelles on connaît soit la viscosité soit la densité du liquide et on veut mesurer simplement l'autre de ces paramètres. Pour cela, on peut déconnecter l'épingle 2 sensible plutôt au paramètre connu et se contenter de mesurer le déphasage produit entre les deux branches de l'autre épingle 2.

A cet effet, la barrette de jumelage 32 peut être munie à ses deux extrémités de pinces 35 permettant de serrer l'extrémité des branches menantes 3 et d'être desserrée en cas de besoin pour pouvoir la dégager.

L'addition de palettes 25 ou 26 permet donc d'améliorer sensiblement la mesure de la viscosité et de la densité des liquides par épingles vibrantes. Une application importante de cette invention concerne l'industrie pétrochimique où il faut déterminer simultanément ces deux paramètres.

**Revendications**

1. Viscodensimètre à éléments vibrants pour liquides, comprenant deux éléments vibrants à deux branches munis chacun d'une palette à leur partie inférieure plongeant dans le liquide, une barrette de jumelage (32) reliant entre elles une extrémité supérieure de chaque élément, des moyens (33, 34) de mise en vibration de la barrette de jumelage ou de l'extrémité supérieure de chaque élément vibrant, des capteurs de déplacement (13, 14) situés sur la barrette de jumelage et aux extrémités supérieures des éléments vibrants (2), une des palettes (25) étant orientée parallèlement à la direction de la vibration, l'autre palette (26) perpendiculairement à ladite direction.

2. Viscodensimètre selon la revendication 1, caractérisé en ce que les éléments vibrants sont des épingles.

3. Viscodensimètre selon la revendication 1, caractérisé en ce que la barrette de jumelage (32) comporte des moyens (35) permettant de maintenir ou de dégager les épingles (2).

4. Viscodensimètre selon la revendication 1, caractérisé en ce que les moyens de mise en vibration de la barrette de jumelage (32) comprennent un excentrique (33) entraîné par un moteur (34).

5. Viscodensimètre selon la revendication 1, caractérisé en ce que les capteurs (13, 14) servent à mesurer des déphasages entre les mouvements des branches menées et menantes de chaque épingle.

## Patentansprüche

1. Viskose- und Densimeter mit schwingenden Elementen für Flüssigkeiten, mit zwei schwingenden Elementen mit zwei Flügeln, die jeweils mit einer Schaufel an ihrem unteren Bereich versehen sind, der in die Flüssigkeit eintaucht, einem Verbindungssteg (32), der die oberen Enden eines jeden Elements miteinander verbindet, Einrichtungen (33, 34) zum In-Schwingung-Versetzen des Verbindungssteges oder des oberen Endes eines jeden schwingenden Elements, Bewegungsaufnehmer (13,14), die auf dem Verbindungssteg angeordnet sind und an den oberen Enden der schwingenden Elemente (2) angeordnet sind, wobei die eine Schaufel (25) parallel zur Schwingungsrichtung und die andere Schaufel (26) senkrecht zu dieser Richtung ausgerichtet ist.

2. Viskose- und Densimeter nach Anspruch 1, **dadurch gekennzeichnet,** daß die schwingenden Elemente Nadeln sind.

3. Viskose- und Densimeter nach Anspruch 1, **dadurch gekennzeichnet,** daß der Verbindungssteg (32) Einrichtungen (35) aufweist, die ermöglichen, die Nadeln (2) zu halten oder zu lösen.

4. Viskose- und Densimeter nach Anspruch 1, **dadurch gekennzeichnet,** daß die Einrichtungen zum In-Schwingung-Versetzen des Verbindungsstegs (32) einen Exzenter (33) aufweisen, der durch einen Motor (34) angetrieben wird.

5. Viskose- und Densimeter nach Anspuch 1, **dadurch gekennzeichnet,** daß die Aufnehmer (13, 14) dazu dienen, Phasenfehler zwischen den Bewegungen der angetriebenen und antreibenden Arme einer jeden Nadel zu messen.

## Claims

1. Vibrating-element viscodensimeter for liquids, comprising two vibrating elements each with two branches, each element being provided with a paddle at its lower part immersed in the liquid, a coupling strip (32) connecting together an upper end of each element, means (33, 34) of vibrating the coupling strip or the upper end of each vibrating element and displacement sensors (13, 14) situated on the coupling strip and at the upper ends of the vibrating elements (2), one of the paddles (25) being oriented parallel to the direction of vibration, the other paddle (26) perpendicular to the said direction.

2. Viscodensimeter according to Claim 1, characterised in that the vibrating elements are pins.

3. Viscodensimeter according to Claim 1, characterised in that the coupling strip (32) includes means (35) allowing the pins (2) to be held or released.

4. Viscodensimeter according to Claim 1, characterised in that the means of vibrating the coupling strip (32) comprise an eccentric (33) driven by a motor (34).

5. Viscodensimeter according to Claim 1, characterised in that the sensors (13, 14) serve to measure phase shifts between the movements of the driven and driving branches of each pin.